Europäisches Patentamt

European Patent Office

Office européen des brevets

(11) Publication number: **0 410 939 A1**

# EUROPEAN PATENT APPLICATION

(21) Application number: 90830284.7

(51) Int. Cl.⁵: B60N 3/06

(22) Date of filing: 25.06.90

(30) Priority: 28.07.89 IT 356989

(43) Date of publication of application:
30.01.91 Bulletin 91/05

(84) Designated Contracting States:
DE ES FR GB

(71) Applicant: O.M.S.I. s.a.s. DI BACCARO
VINCENZO & C. C.
Via Parini, 3
I-40069 Zola Predosa Bologna(IT)

(72) Inventor: Baccaro, Vincenzo
Via Don L. Sturzo, 14
I-40135 Bologna(IT)

(74) Representative: Pederzini, Paolo
c/o BUGNION S.p.A. Via Dei Mille, 19
I-40121 Bologna(IT)

(54) **Foot-rest for motor-cars.**

(57) The foot-rest described in this invention is wedge-shaped and is fitted with means (22) to firmly fix it to the area of the floorpan (18) of cars, between the seat (8) and the lower part of the panelling (15), acting as a support to the driving pedals (2, 3 and 4); once firmly fixed to the floorpan (18), its overall vertical and horizontal dimensions are such as to occupy the part of the floorpan both beneath and in front of the accelerator pedal (2), its upper surface (5) being inclined in relation to the floor (18) and having an uneven surface; said inclined surface (5) slants downwards from the area beneath the accelerator pedal (2) towards the seat (8) and is inclined in such a way as to prevent it from at least, coming into full contact with the rear tip of the heel (6) and the upper (16) of the driver's shoe (7).

FIG1

# FOOT-REST FOR MOTOR-CARS

This invention describes a foot-rest for motor-cars, designed as a stop and a rest for the rear tip of the heel of the driver's shoe.

The inside of the bottom or floorpan of cars is usually covered in some form of floor-matting, such as fitted carpeting or a similar kind of synthetic material, particularly the area extending from the seat and lower part of the panelling acting as a support to the driving pedals, which usually has protective foot-mats or covers to protect the matting underneath, and once these covers wear out, they can easily be replaced at a modest price.

Furthermore, these foot-mats are easily removable for washing or cleaning purposes, whereas the floor-matting itself is usually firmly fixed to the floorpan of the car.

These foot-mats are manufactured in different materials, the most frequent of these being plastic and rubber, and they are usually placed in the area either beneath or in front of the driving pedals. This particular area (beneath or in front of the driving pedals) is fairly limited and is the part of the car floorpan matting, obviously on the driver's side, that is likely to receive most wear and tear, since the driver, unlike the passengers, usually has to keep his/her feet in the same place.

The right foot, in particular, or rather, the right shoe, constantly has the heel resting on the foot-mat and the toe on the accelerator pedal for obvious reasons.

Yet, when in this position, the whole of the rear tip of the heel of the shoe is rested on the foot-mat, along with the rear part of the upper, causing inevitable wear and tear. This particular area of the shoe is the pivot point of any of the movements made by the foot while the car is being driven.

A further point to be taken into consideration is deposits of dust or sand that are always being brought to the foot-mat on the driver's shoes, which unfortunately remain stuck to it, thus causing further rubbing to the heel and rear of the upper of the driver's shoe.

Continuous resting and rubbing of the shoe against the foot-mat, will thus cause the shoe to slowly wear out.

It is, therefore, the purpose of this invention to overcome the afore-mentioned disadvantages.

In the form of the claims characterising it, this invention resolves the afore-mentioned problem in the form of a wedge-shaped foot-rest which is fitted with means of firmly fixing it to the area of the floorpan of the cars it is to be used in, between the seat and the lower part of the panelling, acting as a support to the driving pedals; at least, once it is firmly fixed to the floorpan, the overall vertical and horizontal dimensions of this foot-rest are such as to occupy the part of the floorpan both beneath and in front of the accelerator pedal, its upper surface being inclined in relation to the floor and having an uneven surface. The inclined surface slants downwards from the area beneath the accelerator pedal towards the seat and is inclined in such a way as to prevent it from at least coming into full contact with either the rear tip of the heel or the upper of the driver's shoe.

One of the advantages of this invention is that the foot-rest prevents the shoe from continually rubbing against the floor of the car while driving, as it is part of the floorpan. A further advantage is the fact that while driving the foot can be firmly held in the correct position and at ideal height, according to the size of the driver's foot.

This invention is subsequently explained in greater detail in the following description with the diagrams enclosed, these being only one example of the invention and not to be interpreted as being in any way restrictive, as follows:

- Fig. 1 is a diagram showing a perspective side view of the inside of a car with the foot-rest in the terms of this invention;
- Fig. 2 is a diagram showing a side view, of the diagram in Fig. 1;
- Fig. 3 is a diagram showing a constructional variant of the III - III section of the foot-rest in Fig. 1, with an enlarged scale;
- Fig. 4 is a diagram showing an exploded view of a constructional variant of the foot-rest with its mat attached to it, as in Fig. 1;
- Fig. 5 is a diagram showing an enlarged view of a detail in Fig. 2;

With reference to the enclosed figures, it can be seen that the foot-rest, 20, is of the kind that can be placed on the floorpan or inside the bottom, 18, of a car as a protective covering. It is particularly suited for use on the part of the floorpan, 18, of the car that is usually completely covered in fitted carpeting, extending from the seat, 8, almost to the lower part of the panelling, 15, containing the dashboard, 30, and acting as a support to the driving pedals of the car in question, these being the accelerator pedal, 2, the clutch pedal, 3, and the brake pedal, 4.

In the terms of this invention the foot-rest is geometrically wedge-shaped and fitted with respective means, 22, to firmly fix it to the floorpan, 18, along with its own upper surface, 5, slanting towards the floor, 18, in the form of a stop to support the sharp outer edge of the rear tip, 9, of the heel, 6, of the driver's shoe, 7, and having an uneven surface.

Ideally, the overall vertical and horizontal dimensions of the foot-rest are such as to occupy, once firmly fixed to the floor, 18, at least that part of the floorpan both beneath and in front of the accelerator pedal, 2.

Obviously, in the terms of another version not shown here, since it can be clearly understood from the enclosed drawings, the overall vertical and horizontal dimensions of the foot-rest, 20, are such as to occupy, once correctly fixed to the floor, 18, of the car, the part of the floorpan both beneath and in front of all of the car's driving pedals.

The upper part of the inclined surface, 5, of the foot-rest, 20, i. e. the part coming into contact with the edge of the rear tip, 9, of the heel, 6, has an uneven surface.to prevent the rear tip, 9, of the heel, 6, from slipping on the inclined surface, 5.

The inclined surface, 5, obviously slants downwards from the accelerator pedal, 2, towards the seat, 8, being inclined in such a way as not to allow at least the rear, 9, of the heel, 6, to come into contact with it.

In order to offer greater protection to the shoe, 7, the inclined surface, 5, is slanted in such a way that only the rear tip, 9, of the heel, 6, and consequently neither the rear tip of the heel, 6, nor the rear part of the upper, 16, will come into contact with surfaces likely to cause them wear and tear through constant rubbing.

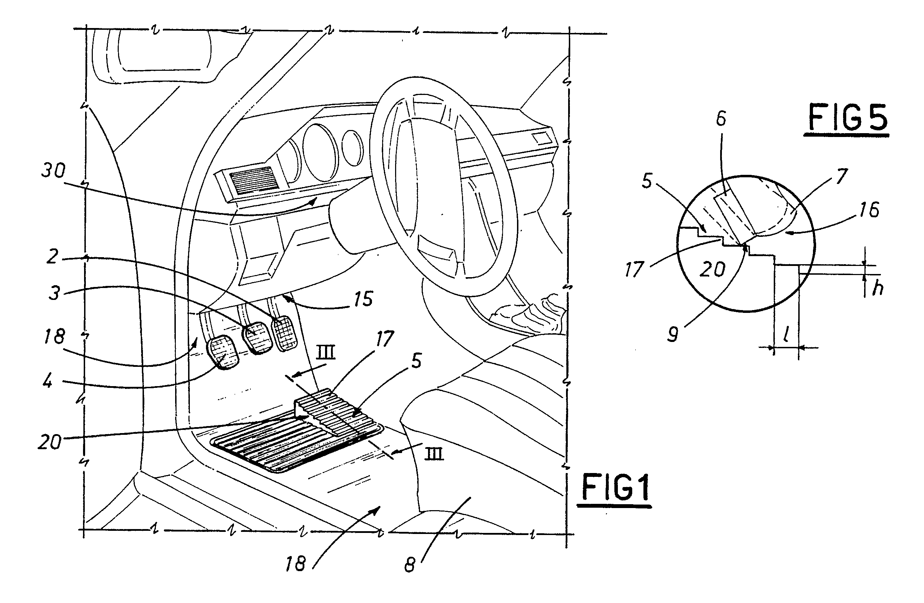

As can clearly be seen in Figures 1 and 5, showing the commonest form of the foot-rest, 20, the upper surface of the inclined surface, 5, of the foot-rest is designed with a series of steps (marked as No. 17 in the Figure), whose height, h, and length, 1, are such as to give the rear tip, 9, of the heel, 6, a firm hold. Figure 5 shows the back of the driver's shoe, 7, in the driving position with the outer edge of the rear tip, 9, of the heel, 6, resting on one of the steps, 17, of the inclined surface, 5; the dotted lines showing the extreme positions taken up by the shoe, 7, while driving. Obviously the steps, 17, of the inclined surface, 5, enable the shoe, 7, to take up a whole range of different positions while the driver's foot is moving around, without the rear area, 9, of the heel, 6, or the rear of the upper, 16, coming into contact with either the mat, 1, or any other surface that might rub against it and consequently cause wear and tear.

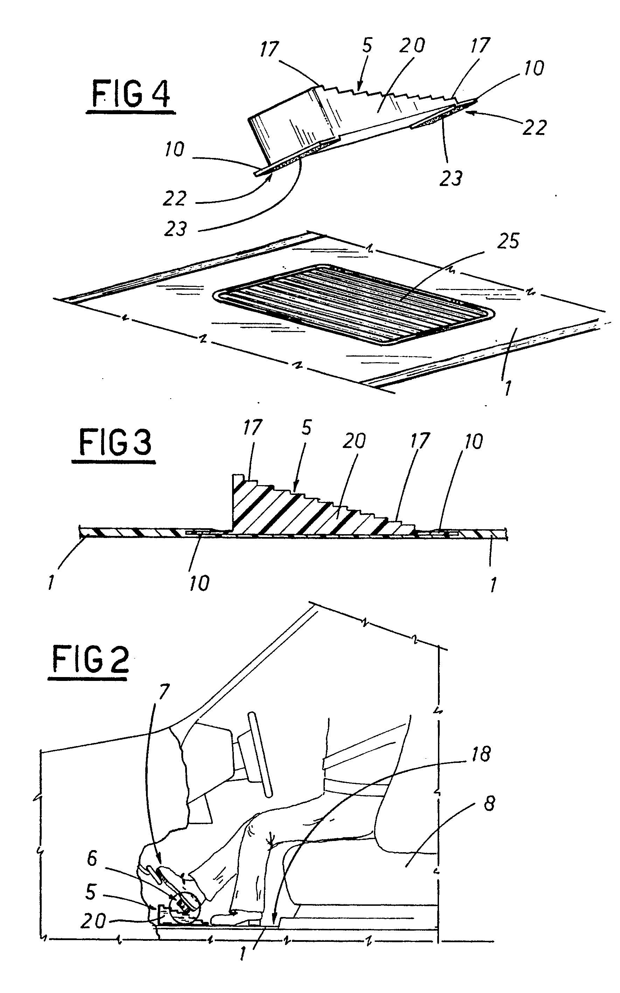

There is more than one way of fixing the foot-rest, 20, to the floorpan, 18, depending upon driver requirements, in any case, the foot-rest, 20, is almost always made of plastic materials and has at least one pair of tabs or tongues, 10, at the sides, these forming the means of its being firmly fixed to the floorpan, 18, as they are subsequently joined to the floorpan with some kind of rapid fastener, such as velcro strips, 23, that are easily attached to the carpeting (see Figure 3) or snap fasteners.

In this way the foot-rest, 20, complete with inclined surface, 5, is firmly attached to the floorpan, 18, while the inclined surface, 5, is a stop to support the driver's foot and is fixed to the foot-rest.

The foot-rest, 20, can also be fixed by glueing, welding or by making brackets, 10, in the same material as is used to manufacture the rest of the mat, 1 (see Fig. 3).

In the event that, as is usually the case, the area inside the bottom or floorpan, 18, of cars extending from the seat, 8, and lower part of the panelling, 15, acting as a support to the driving pedals, 2, 3 and 4, has a protective mat or cover, 1, the means, 22, of firmly fixing the foot-rest, 20, to the floorpan, 18, may consist of at least one pair of tabs or tongues, 10, extending from the outer edges of the foot-rest, 20, also on the same level as the mat, 1, and being attached to and forming an integral part of it.

In the event that the area of the mat, 1, where the driver's foot rests has a reinforcing insert, 25, the foot-rest, 20, may be manufactured as an integral part of the insert, 25, an example of which is shown in Figure 1.

This invention can be subjected to numerous modifications and variations, all of which are within the terms of this invention. Furthermore any or all of these details can be replaced by their technical equivalents.

### Claims

1) Foot-rest (20) for motor cars, of the kind for fitting in the area inside the bottom or floorpan (18) of cars extending between the seat (8) and lower part of the panelling (15) acting as a support to the driving pedals (2, 3 and 4), **wherein** said foot-rest is wedge-shaped and fitted with means (22) to firmly fix it to said floorpan (18), the overall vertical and horizontal dimensions of said foot-rest being such as to occupy, once firmly fixed to the floorpan (18), at least the part of the floorpan both beneath and in front of the accelerator pedal (2), its upper surface (5) being inclined in relation to the floor (18) and having an uneven surface; said inclined surface (5) being a stop and support for the outer edge (9) of the rear tip of the heel of the driver's shoe (7), slanting downwards from the area beneath the accelerator pedal (2) towards the seat (8) and inclined in such a way as to prevent it from at least, coming into full contact with the rear tip of the heel (6) and the upper (16) of the driver's shoe (7).

2) Foot-rest according to the description in claim 1, **wherein** the overall vertical and horizontal dimensions are such as to occupy the part of the floorpan (18) beneath and in front of all of the car's driving pedals (2, 3 and 4).

3) Foot-rest according to the description in claim 1, **wherein** said inclined surface (5) has an uneven surface designed in a series of step-shapes (17), whose height (h) and length (l) are such as to allow the driver a firm hold to the rear tip (9) only, of the heel (6) of his/her shoe (7) while driving the vehicle.

4) Foot-rest according to the description in claim 1, **wherein** said means (22) of its being firmly fixed to the floorpan (18) consists in at least one pair of tongues or tabs (10) at the sides of said foot-rest (20) that can be joined to the floorpan (18) by means of rapid fasteners (23).

5) Foot-rest according to the description in claim 1, particularly if the area inside the bottom or floorpan (18) of cars extends from the seat (8) and lower part of the panelling (15), acting as a support to the driving pedals (2, 3 and 4), has a protective mat or cover, **wherein** said foot-rest (20) is an integral part of the mat (1).

6) Foot-rest according to the description in claim 1, particularly if the area inside the bottom or floorpan (18) of cars extends from the seat (8) and lower part of the panelling (15), acting as a support to the driving pedals (2, 3 and 4), has a protective mat or cover, **wherein** said means (22) of the foot-rest (20) to firmly fix it to the floorpan (18) consist of at least one pair of tabs or tongues (10) at the outer sides of said foot-rest (20), these being on a level with the surface of the mat (1), said tabs or tongues (10) being attached to and forming an integral part of the mat.

7) Foot-rest according to the description in claim 5, **wherein** said tabs or tongues (10) are firmly joined to the mat (1) by welding.

8) Foot-rest according to the description in claim 5, wherein said mat (1) is in the area where the driver's feet rest, and fitted with a reinforcing insert (25) **wherein** said foot-rest (20) is designed as an integral part of said insert (25).

FIG5

FIG1

FIG 4

FIG 3

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | BE-A-6 236 45 (LEMAIRE)<br>* the whole document *<br>– – – | 1,2,3,4,6 | B 60 N 3/06 |
| A | DE-U-8 713 532 (PHOENIX)<br>* the whole document *<br>– – – | 1,3,5 | |
| A | DE-U-8 535 206 (TEMPLIN)<br>* page 2, line 1 - page 2, line 12; figures 1-2 *<br>– – – | 1,2 | |
| A | US-A-3 860 284 (LICHTIG)<br>* the whole document *<br>– – – – – | 1,3 | |

|  | TECHNICAL FIELDS SEARCHED (Int. Cl.5) |
|---|---|
|  | B 60 N<br>A 47 C |

The present search report has been drawn up for all claims

| Place of search | Date of completion of search | Examiner |
|---|---|---|
| The Hague | 08 November 90 | HORVATH R.C. |